# EUROPÄISCHE PATENTSCHRIFT

(11) **EP 2 502 783 B1**
(45) Veröffentlichungstag und Bekanntmachung des Hinweises auf die Patenterteilung: **13.01.2016**
(21) Anmeldenummer: 12160796.4
(22) Anmeldetag: 22.03.2012
(51) Int. Cl.: B60N 3/04, B60Q 3/02

(54) **Befestigungseinrichtung für eine Zusatzmatte**
Fixing device for an additional mat
Dispositif de fixation pour un tapis supplémentaire

(30) Priorität: 22.03.2011 DE 102011014766; 08.04.2011 DE 102011016484
(43) Veröffentlichungstag der Anmeldung: 26.09.2012
(73) Patentinhaber: Saxonia-Franke GmbH & Co. KG, 73037 Goppingen (DE)
(72) Erfinder: Kraft, Robert-Alexander, 73037 Adelberg (DE)
(74) Vertreter: LS-MP von Puttkamer Berngruber Loth Spuhler

(56) Entgegenhaltungen:
- DE-A1- 19 617 408
- DE-U1- 20 319 712
- US-B1- 6 718 576

## Beschreibung

Die vorliegende Erfindung betrifft eine Befestigungseinrichtung für Zusatzmatten in Kraftfahrzeugen.

Aus der DE 196 17 408 C2 ist eine Befestigungseinrichtung für eine Zusatzmatte auf dem Teppichboden eines Kraftfahrzeugs bekannt.

Um den Fußraum eines Kraftfahrzeuges sicherer oder ästhetischer zu gestalten kann dieser beispielsweise beleuchtet werden.

Aus der DE 201 15 018 U1 ist beispielsweise eine Zusatzmatte für Kraftfahrzeuge bekannt, die wenigstens einen lichtreflektierenden Bereich aufweist, durch den einfallendes Licht reflektiert wird. Dadurch wird eine Ausleuchtung des Fußraumes des Kraftfahrzeuges erreicht. Dies erleichtert vor allem in der Nacht zum einen das Einsteigen in das Kraftfahrzeug und führt zum anderen auch während einer Fahrt zu einer leichten Erhellung des Kraftfahrzeuginnenraumes. Der lichtreflektierende Bereich besteht beispielsweise aus, auf einem Trägermaterial aufgeklebten, teilweise aluminiumbeschichteten Glaskugeln. Das Trägermaterial ist mit der eigentlichen Zusatzmatte vernäht, verklebt oder verschweißt.

Aus der DE 20 2004 005 367 U1 geht eine nachrüstbare Zusatzmatten-Beleuchtung hervor, die einen Leuchtkörper umfasst. Die Zusatzmatten-Beleuchtung ist durch ein aufsteckbares Beleuchtungselement gebildet, das zur Montage mit der Hilfe von Metalllaschen an einer Zusatzmatte eines Fahrzeuges befestigt wird. Hierzu ist es erforderlich, in die Zusatzmatte Löcher einzubringen, in die die Metalllaschen des Beleuchtungselements eingesteckt werden. Die Metalllaschen werden danach an der Unterseite der Zusatzmatte umgebogen. Es ist erkennbar, dass ein derartiges Beleuchtungsmittel im Hinblick auf seinen relativ komplizierten Aufbau, das Einbringen von Löchern in die Zusatzmatte sowie die erforderlichen Befestigungsschritte kompliziert und zeitaufwändig ist.

Aus der DE 203 19 712 U1 ist eine Befestigungsvorrichtung entsprechend dem Oberbegriff des Anspruchs 1 bekannt.

Die bekannten beleuchteten Zusatzmatten weisen zum einen komplizierte Anordnungen zum elektrischen Anschluss auf oder sind sehr kompliziert ausgebildet.

Vor diesem Hintergrund liegt der Erfindung die Aufgabe zugrunde, eine Befestigungseinrichtung zur Befestigung von Zusatzmatte in einem Kraftfahrzeug anzugeben, die ästhetisch ansprechend gestaltet ist und die zudem eine erhöhte Sicherheit beim Einstieg erreicht wird.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Diese Aufgabe ist bei einer Befestigungseinrichtung mit den Merkmalen des Anspruchs 1 gelöst.

Das Leuchtmittel weist eine Leuchtquelle auf, die im Basiselement der Befestigungseinrichtung angeordnet ist.

Eine bevorzugte Ausführungsform der Befestigungseinrichtung ist dadurch gekennzeichnet, dass das Basiselement ein Kopfteil aufweist, das dazu geeignet ist, über den Teppichboden hinauszuragen. An dem Kopfteil ist das Aufsetzelement befestigbar.

Eine bevorzugte Ausführungsform Befestigungseinrichtung ist dadurch gekennzeichnet, dass das Basiselement, das Kopfteil, das Aufsetzelement und/oder die Zusatzmatte wenigstens eine Lichtaustrittsfläche aufweisen.

Alternativ verfügt beispielsweise das Kraftfahrzeug über eine zentral angeordnete Leuchtquelle die über lichtleitende Mittel, wie beispielsweise Glasfasern, mit den jeweiligen Basiselementen verbunden ist.

Eine weitere bevorzugte Ausführungsform der vorliegenden Befestigungseinrichtung ist dadurch gekennzeichnet, dass das Basiselement elektrische Kontaktanschlüsse aufweist. Das Leuchtmittel in dem Basiselement ist vorzugsweise mit den Kontaktanschlüssen elektrisch leitend verbunden.

Eine weitere bevorzugte Ausführungsform der Befestigungseinrichtung ist dadurch gekennzeichnet, dass zwischen den Kontaktanschlüssen und dem Leuchtmittel eine elektronische Schaltung zur Ansteuerung des Leuchtmittels angeordnet ist. Vorzugsweise ist die elektronische Schaltung im Basiselement untergebracht.

Eine weitere bevorzugte Ausführungsform der Befestigungseinrichtung ist dadurch gekennzeichnet, dass das Basiselement und/oder das Kopfteil mit wenigstens einem lichtleitenden Element versehen sind. Das lichtleitende Element lenkt das von dem Leuchtmittel ausgestrahlte Licht an die wenigstens eine Lichtaustrittsfläche. Als lichtleitendes Element eignen sich beispielsweise Glas oder transparente Kunststoffe, die für das von dem Leuchtmittel ausgestrahlte Licht optisch leitend sind.

Eine weitere bevorzugte Ausführungsform der erfindungsgemäßen Befestigungseinrichtung ist dadurch gekennzeichnet, dass an dem Basiselement ein Schaltmechanismus zur Ansteuerung des Leuchtmittels angeordnet ist. Der Schaltmechanismus ist vorzugsweise durch das Aufsetzelement betätigbar.

Vorzugsweise ist der Schaltmechanismus betätigt, wenn das Aufsetzelement mit dem Basiselement verrastet ist. Auf diese Weise kann die korrekte Befestigung des Aufsatzelementes am Basiselement angezeigt werden.

Eine weitere bevorzugte Ausführungsform der Befestigungseinrichtung ist dadurch gekennzeichnet, dass die Leuchtquelle eine Kaltlichtquelle ist. Die Kaltlichtquelle kann beispielsweise durch eine oder mehrere LEDs oder OLEDs gebildet sein. Alternativ können auch andere gleichwertige Leuchtquellen verwendet werden.

Eine andere bevorzugte Ausführungsform der vorliegenden Befestigungseinrichtung ist dadurch gekennzeichnet, dass die Lichtaustrittsfläche in Form eines wenigstens für Licht teilweise transparenten Logos ausgebildet ist. Hierbei kann das teilweise transparente Logo auf der Oberseite des Kopfteils angebracht sein. Das Aufsetzelement ist hierbei vorzugsweise ringförmig um das Kopfteil angeordnet.

Eine weitere bevorzugte Ausführungsform der Befestigungseinrichtung ist dadurch gekennzeichnet, dass das Aufsetzelement wenigstens eine Lichtaustrittsfläche aufweist, wobei das Licht aus einer Lichtquelle im Basiselement über lichtleitende Elemente im Bereich des Kopfteils zu dem Aufsetzelement geleitet wird.

Vorzugsweise ist die Lichtaustrittsfläche hierbei an der Seitenkante und/oder der Oberseite des Aufsetzelements angeordnet.

Eine weitere bevorzugte Ausführungsform der Befestigungseinrichtung ist dadurch gekennzeichnet, dass die Zusatzmatte wenigstens an einer ihrer Seitenkanten und/oder im von den Seitenkanten umgebenen Innenbereich der Zusatzmatte ein oder mehrere lichtleitende Elemente aufweist.

Vorzugsweise tritt das von dem Leuchtmittel der Befestigungseinrichtung ausgesandte Licht über die lichtleitenden Elemente der Zusatzmatte als Lichtaustrittsflächen aus.

Der Vorteil der erfindungsgemäßen Befestigungseinrichtung besteht darin, dass sie ein integriertes Beleuchtungsmittel umfasst, sodass neben der ohnehin erforderlichen Befestigungseinrichtung zur Befestigung einer Zusatzmatte an dem Teppichboden eines Kraftfahrzeuges an der Zusatzmatte selbst keine zusätzlichen Vorkehrungen, beispielsweise in der Form von Löchern oder Einschnitten, geschaffen werden müssen.

Weitere Vorteile, Merkmale und Einzelheiten der Erfindung ergeben sich aus der nachfolgenden Beschreibung, in der unter Bezugnahme auf die Zeichnungen ein Ausführungsbeispiel im Einzelnen beschrieben ist.

Es zeigen:
- Figur 1: einen Querschnitt durch eine erfindungsgemäße Ausführungsform der befestigten Befestigungseinrichtung,
- Figur 2: eine Ausführungsform des Basiselements im auseinandergenommenen Zustand,
- Figur 3a und 3b: dreidimensionale Ansichten des Basiselements in verschiedenen Ausführungsformen,
- Figur 4: eine Ausführungsform der Beleuchtungseinheit,
- Figur 5: eine Ausführungsform des Aufsetzelements in auseinandergenommen Zustand,
- Figur 6: eine Aufsicht auf eine Ausführungsform des Unterteils des Aufsetzelements,
- Figur 7: eine weitere Ausführungsform der Befestigungseinrichtung in dreidimensionaler Ansicht, und
- Figur 8a und 8b: dreidimensionale Ansichten des Basiselements und des Aufsetzelements gemäß der in Figur 7 dargestellten Befestigungseinrichtung.

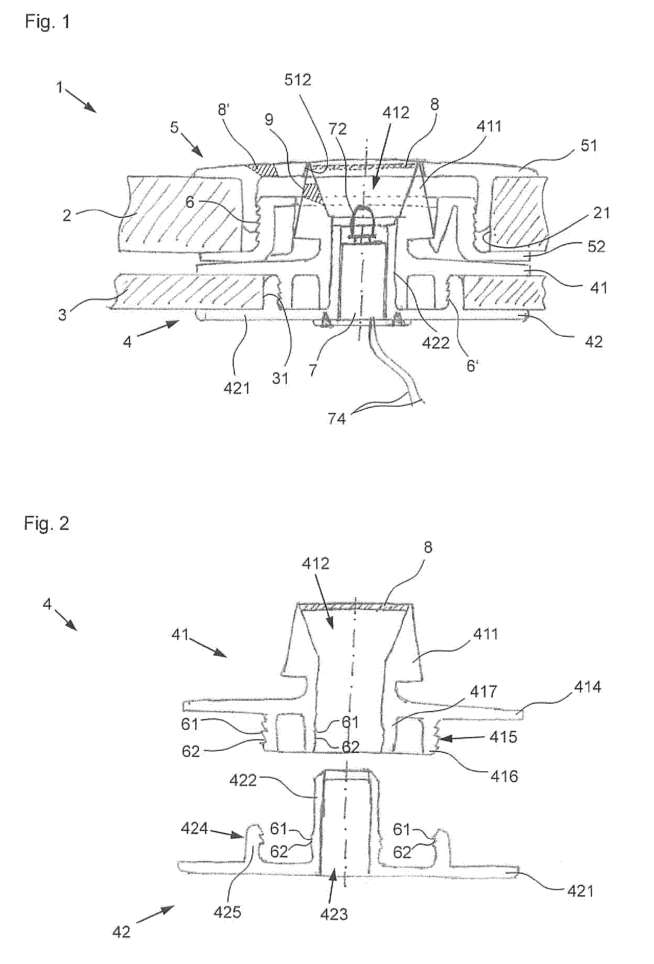

In Figur 1 ist ein Querschnitt durch eine erfindungsgemäße Ausführungsform der befestigten Befestigungseinrichtung 1 dargestellt. Die Befestigungseinrichtung 1 umfasst ein Basiselement 4 und ein Aufsetzelement 5.

Das Basiselement 4 ist am Teppichboden 3, beispielsweise eines Kraftfahrzeuges angebracht. Hierzu umfasst das Basiselement 4 ein Oberteil 41 und ein Unterteil 42. Das Oberteil 42 und das Unterteil 42 des Basiselementes 4 sind über eine Einrastvorrichtung 6' miteinander verbunden. Der Teppichboden 3 weist eine Öffnung 31 auf, durch die das Oberteil 41 und das Unterteil 42 geführt sind. Der Teppichboden 3 ist zwischen dem Unterteil 42 und dem Oberteil 41 des Basiselements 4 fixiert.

Das Aufsetzelement 5 umfasst ein Oberteil 51 und ein Unterteil 52. Das Aufsetzelement 5 ist in einer Öffnung 21 der Zusatzmatte 2 befestigt. Die Zusatzmatte 2 ist zwischen dem Unterteil 52 und dem Oberteil 51, die über eine Einrastvorrichtung 6 miteinander verbunden sind, fixiert. Das Unterteil 42 des Basiselements 4 weist mittig einen vorzugsweise zylindrischen, hohlen Zapfen 422 auf, der von der Grundplatte 421 des Unterteils 42 aufragt. Das Oberteil 41 des Basiselements 4 weist ein Kopfteil 411 auf, das über den Teppichboden 3 hinausragt. Das Kopfteil 411 weist einen hohlen Innenraum 412 auf, der in der dargestellten Ausführungsform der Befestigungseinrichtung 1 an der Oberseite mit einer wenigstens teilweise transparenten Lichtaustrittsfläche 8 versehen ist. In der dargestellten Ausführungsform weist das Kopfteil 411 an der linken Seitenfläche ein lichtleitendes Element 9 auf. Über das lichtleitende Element 9 tritt Licht aus dem Innenraum 412 des Kopfteils 411 aus. Das Oberteil 51 des Aufsetzelements 5 weist eine Öffnung 512 auf. Die Öffnung 512 ist so groß, um das Kopfteil 411 des Basiselements 4 in aufzunehmen. Vorzugsweise bildet das Kopfteil 411 zusammen mit dem Oberteil 51 des Aufsetzelements 5 eine leicht gewölbte Oberfläche. Das Kopfteil 411 ragt vorzugsweise nicht über die gewölbte Oberfläche des Oberteils 51 hinaus. In der dargestellten Ausführungsform weist das Oberteil 51 des Aufsetzelements 5 eine weitere Lichtaustrittsfläche 8' auf. Das Oberteil 51 kann eine oder mehrere Lichtaustrittsflächen 8' aufweisen, die auf der Oberseite oder an den Seitenkanten des Deckelteils 511 angeordnet sind. Das Oberteil 51 bzw. das Unterteil 52 sind vorzugsweise einstückig ausgebildet, beispielsweise mittels eines Spritzgussverfahrens hergestellt.

Die Austrittsflächen 8 bzw. 8' an dem Oberteil 51 bzw. an der Oberseite des Kopfteils 411 sind nicht in der Form oder Gestalt auf die in den dargestellten Ausführungsformen gezeigten beschränkt. Vielmehr können die Lichtaustrittsflächen 8, 8' nahezu jede beliebige Form aufweisen. Insbesondere können die Lichtaustrittsflächen 8, 8' Firmenlogos oder andere Formen aufweisen.

Das Kopfteil 411 kann der Gestalt sein, dass es entweder nur eine oberseitige Lichtaustrittsfläche 8 aufweist, nur seitlich angeordnete lichtleitende Elemente 9 aufweist, oder sowohl eine oberseitige Lichtaustrittsfläche 8 als auch seitlich angeordnete lichtleitende Elemente 9 aufweist. Bei einer Ausführungsform des Kopfteils 411, die nur eine oberseitige Lichtaustrittsfläche 8 aufweist, umfasst das Oberteil 52 des Aufsetzelements 5 keine weitere Lichtaustrittsfläche. Bei einer Ausführungsform des Kopfteils 411 mit seitlichen lichtleitenden Elementen 9, weist das Oberteil 51 des Aufsetzelements 5 eine oder mehrere Lichtaustrittsflächen 8 auf.

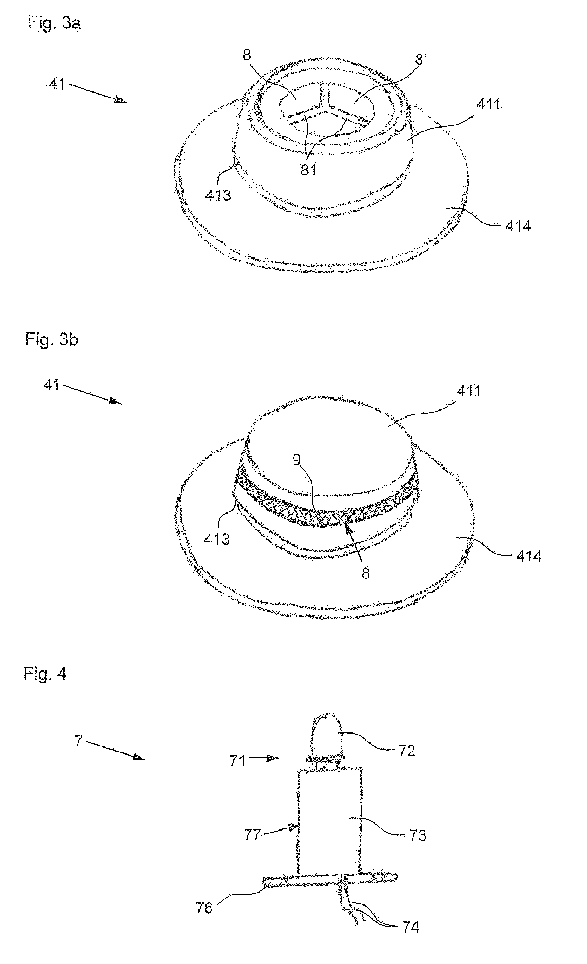

Im Inneren des Basiselements 4 ist eine Beleuchtungseinheit 7 umfassend, eine Leuchtquelle 72, angeordnet. Die Beleuchtungseinheit 7 ist im Detail in Figur 4 dargestellt. Die Beleuchtungseinheit 7 ist über den zylindrischen Zapfen 422 des Basiselements 4 eingebracht. Die Leuchtquelle 72 der Beleuchtungseinheit 7 ragt bis in den Innenraum 412 des Kopfteils 411. Das von der Leuchtquelle 72 ausgestrahlte Licht wird über die Lichtaustrittsflächen 8 an der Oberseite des Kopfteils 411 und/oder über lichtleitende Elemente 9 an Lichtaustrittsflächen 8' an dem Oberteil 52 des Aufsetzelements 5 nach außen geführt.

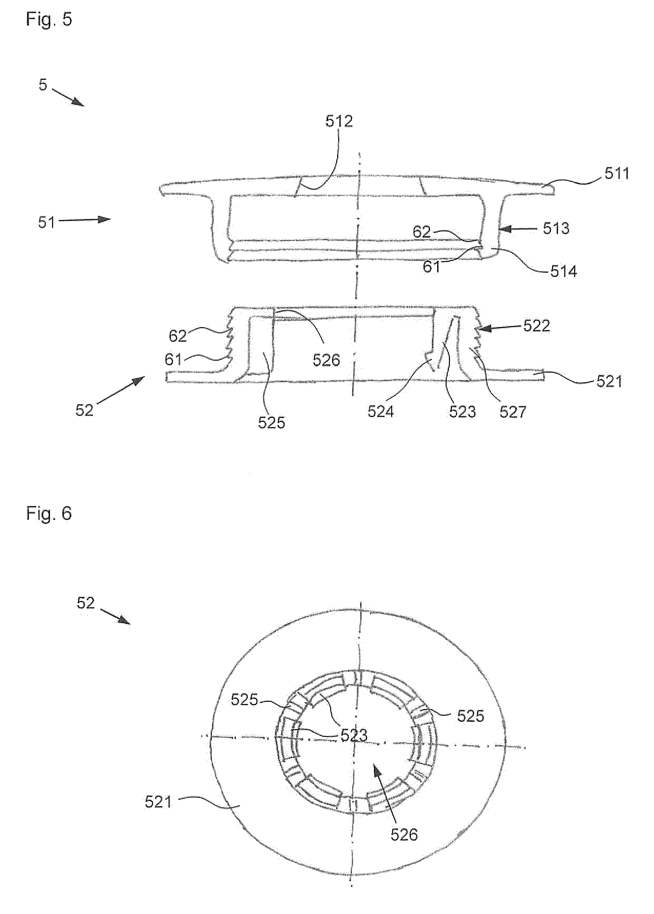

Das Basiselement 4 ist im Detail in Figur 2 sowie in den Figuren 3a und 3b dargestellt. Das Aufsetzelement 5 ist im Detail in Figur 5 sowie Figur 6 dargestellt.

In Figur 2 ist eine Ausführungsform des Basiselements 4 im auseinandergenommenen Zustand dargestellt. Das Basiselement 4 weist ein Oberteil 41 und ein Unterteil 42 auf. Das Unterteil 42 umfasst eine Grundplatte 421. Aus der Grundplatte 421 ragt mittig ein vorzugsweise zylindrischer Zapfen 422 hervor. Der Zapfen 422 weist eine durchgängige Öffnung 423 auf. Zur Befestigung des Unterteils 42 mit dem Oberteil 41 des Basiselements 4 über eine Einrastvorrichtung 6, 6' weist das Unterteil 42 ein Halteteil 424 auf. Das Halteteil 424 ist durch ein den Zapfen 422 konzentrisch umgebendes Ringteil 425 gebildet.

Das Oberteil 41 bzw. das Unterteil 42 sind vorzugsweise einstückig ausgebildet, beispielsweise mittels eines Spritzgussverfahrens hergestellt. Das Ringteil 425 weist an seiner Innenfläche Vorsprünge 61 und Vertiefungen 62 auf, die in axialer Richtung nebeneinander angeordnet sind. Die Vorsprünge 61 und Vertiefungen 62, die auch durch Gewindegänge gebildet sein können, greifen im verriegelten Zustand in entsprechend ausgebildete Vorsprünge 62 und Vertiefungen 62, die am Außenumfang eines Aufnahmeteils 415 des Oberteils 41 vorgesehen sind ein. Das Aufnahmeteil 415 des Oberteils 42 weist vorzugsweise die Form eines, ein weiteres Aufnahmeteil 417 konzentrisch umgebendes, Ringteils 416 auf. Das Ringteil 416 des Oberteils 41 weist an der Außenfläche Vorsprünge 61 und Vertiefungen 62 auf.

Das Oberteil 41 des Basiselements 4 weist ein Tellerteil 414 auf. Von der Unterseite des Tellerteils 414 erstrecken sich das Aufnahmeteil 415 sowie ein weitere Aufnahmeteil 417. Auf der Oberseite des Tellerteils 414 ragt das Kopfteil 411 hervor. Das Kopfteil 411 weist im unteren Bereich eine, das Kopfteil 411 konzentrisch umlaufende Schulter 413 auf, in die ein Hakenteil des Aufsetzelements eingreifen kann. Das Kopfteil 411 weist einen durchgängigen Innenraum 412 auf, der in der dargestellten Ausführungsform an der Oberseite mit einer wenigstens teilweise transparenten Lichtaustrittsfläche 8 verschlossen ist. Der Zapfen 422 des Unterteils 42 weist auf der Außenseite Vorsprünge 61 und Vertiefungen 62 auf, die in entsprechende Vorsprünge 61 und Vertiefungen 62 auf der Innenseite des weiteren Aufnahmeteils 417 verrastet werden können.

In den Figuren 3a und 3b sind dreidimensionale Ansichten des Oberteils 41 eines Basiselements 4 in verschiedenen Ausführungsformen dargestellt.

Bei der in Figur 3a dargestellten Ausführungsform des Oberteils 41 des Basiselements 4 weist das Kopfteil 411 an der Oberseite eine Lichtaustrittsfläche 8 auf. Die Lichtaustrittsfläche 8 ist durch mehrere Stege 81 in Segmente unterteilt. Die Lichtaustrittsfläche 8 kann alternativ auch eine durchgehende Fläche aufweisen, die beispielsweise mittels eines auf die Lichtaustrittsfläche 8 aufgebrachten Aufdrucks oder eines Klebelements, das beispielsweise die Form eines Firmenlogo aufweist, in mehrere Lichtaustrittsflächen 8, 8' unterteilt sein.

Bei der in Figur 3b dargestellten Ausführungsform des Oberteils 41 des Basiselements 4 weist das Kopfteil 411 an der Mantelfläche eine oder mehrere Lichtaustrittsflächen 8 auf. In der dargestellten Ausführungsform ist die Lichtaustrittsfläche 8 durch ein die Mantelfläche des Kopfteils 411 konzentrisch umgebendes Band gebildet. Die Lichtaustrittsfläche 8 ist durch ein oder mehrere lichtleitende Elemente 9 gebildet, die das Licht aus dem Innenraum des Kopfteils 411 nach außen leiten.

In Figur 4 ist eine Ausführungsform der Beleuchtungseinheit 7 dargestellt. Die Beleuchtungseinheit 7 umfasst eine Grundplatte 76, die an dem Unterteil 42 des Basiselements 4 befestigbar ist. Auf der Grundplatte 76 ist ein, vorzugsweise an die Innenkontur des Zapfens 422 angepasstes Gehäuse 77 angeordnet. In dem Gehäuse 77 ist eine elektronische Schaltung 73 angeordnet. Die Beleuchtungseinheit 7 weist elektrische Kontaktanschlüsse 74 auf, um die Beleuchtungseinheit 7 elektrisch anzuschließen und/oder um Steuersignale an die elektronische Schaltung 73 zu senden. Von der Oberseite des Gehäuses 77 ragt eine Leuchtquelle 72 hervor, die das Leuchtmittel 71 bildet. Die Leuchtquelle 72 kann beispielsweise durch eine LED gebildet sein.

In einer weiteren, nicht dargestellten Ausführungsform der Beleuchtungseinheit 7 weist diese eine optische Steuerungseinheit auf, die das von einer beispielsweise zentral im Kraftfahrzeug angeordneten Lichtquelle ausgesandte Licht über beispielsweise Glasfasern empfängt und über eine beispielsweise Streulinse, die das Leuchtmittel 71 bildet, an der ausgibt. Das Licht tritt dann über Lichtaustrittsflächen bzw. über lichtleitende Elemente an der Oberseite der Befestigungseinrichtung 1 aus.

In Figur 5 ist eine Ausführungsform des Aufsetzelements 5 in auseinandergenommen Zustand dargestellt. Das Aufsetzelement 5 umfasst ein Oberteil 51 und ein Unterteil 52. Das Oberteil 51 umfasst einen leicht gewölbten Deckelteil 511, der mittig mit einer Öffnung 512 versehen ist. Durch die Öffnung 512 ragt das Kopfteil des Basiselements. Von der Unterseite des Deckelteils 511 erstreckt sich ein sich konzentrisch erstreckendes, ein Aufnahmeteil 513 bildendes Ringteil 514. Das Ringteil 514 ist auf der Innenfläche mit sich konzentrisch erstreckenden Vorsprüngen 61 und Vertiefungen 62 versehen. Die Vorsprünge 61 und Vertiefungen 62 greifen in entsprechende Vorsprünge 61 und Vertiefungen 62 an der Außenfläche eines Halteteils 522 an dem Unterteil 52 des Aufsetzelements 5 ein.

Das Unterteil 52 des Aufsetzelements 5 weist eine Grundplatte 521 auf, von der sich ein, eine Öffnung 526 konzentrisch umgebendes, Ringteil 527 erstreckt, das ein Halteteil 522 bildet. An der Außenfläche des Ringteils 527 sind sich konzentrisch erstreckende Vorsprünge 61 und Vertiefungen 62 angeordnet. Die Vorsprünge 61 und Vertiefungen 62 an der Innenfläche des Ringteils 514 des Oberteils 51 oder an der Außenfläche des Ringteils 527 des Unterteils 52 können jeweils durch Gewindegänge gebildet sein.

An der Innenfläche des Ringteils 527 sind mehrere in die Öffnung 526 ragende federnde Zungenteile 523 angeordnet. Vorzugsweise sind mehrere Zungenteile 523 gleichmäßig verteilt um die Öffnung 526 herum angeordnet. Die Zungenteile 523 weisen an ihren freien Enden jeweils ein Hakenteil 524 auf, das im montierten Zustand die Schulter 413 des Kopfteils 411 des Basiselements 4 hintergreifen kann. Zwischen den Zungenteilen 523 sind Anschlagelemente 525 angeordnet, die als Radialanschläge für das Kopfteil 411 dienen und verhindern, dass die Zungenteile 523 bei radialen Belastungen der Zusatzmatte 2 überlastet werden. Solche Belastungen können entstehen, wenn die Zusatzmatte 2 und somit das mit dieser verbundene Aufsetzelement 5 relativ zum Basiselement 4 in einer Richtung verschoben wird und dabei nur die Zungenteile 523 in einem Teilbereich des Umfangs, um den sie verteilt sind, belastet werden. Eine detaillierte Darstellung der Anordnung der Zungenelemente 523 und der Anschlagelemente 525 ist der in Figur 6 dargestellten Aufsicht auf eine Unterteil 52 des Aufsetzelements 5 zu entnehmen.

In Figur 6 ist eine Aufsicht auf eine Ausführungsform des Unterteils 52 des Aufsetzelements 5 dargestellt. Vorzugsweise ist jeweils zwischen zwei Zungenelementen 523 ein Anschlagelement 525 angeordnet. Das Anschlagelement 525 weist vorzugsweise die Form einer radial verlaufenden Scheibe auf, die an das, das Halteteil 522 bildende Ringteil 527 angeformt sind. Die Anschlagelemente 525 erstrecken sich in den Innenraum, soweit, dass sie den Ausfederweg der Hakenteile 524 nach außen hin begrenzen können.

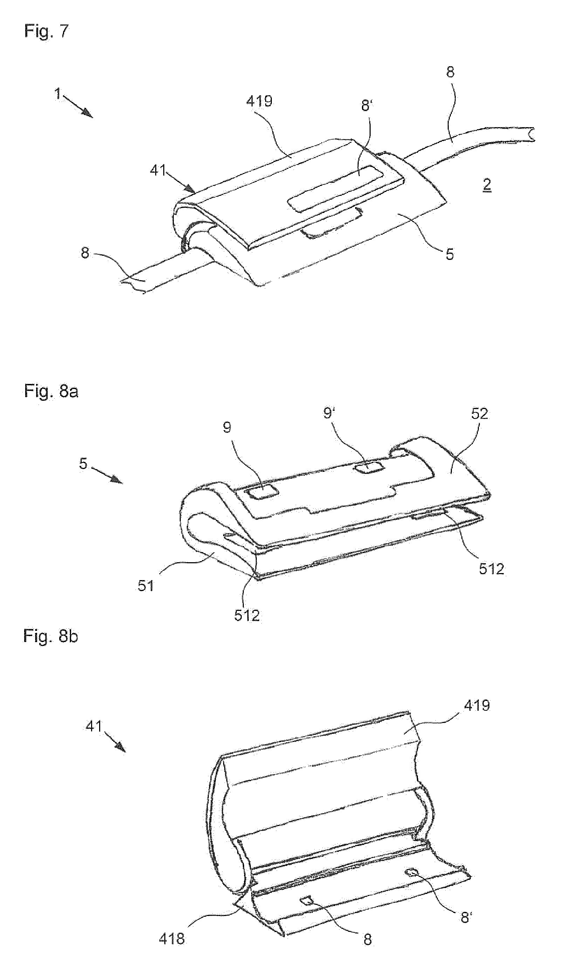

In Figur 7 ist eine weitere Ausführungsform der Befestigungseinrichtung 1 in dreidimensionaler Ansicht dargestellt. Die Befestigungseinrichtung 1 umfasst ein mit dem Teppichboden verbindbares Basiselement 4, von dem nur das Oberteil 41 sichtbar ist. Des Weiteren umfasst die Befestigungseinrichtung 1 ein an der Zusatzmatte 2 befestigbares Aufsetzelement 5 auf. Das Oberteil 41 des Basiselements 4 ist im Detail in der Figur 8b dargestellt, das Aufsetzelement 5 in Figur 8a. Das aus dem Basiselement 4 austretende Licht wird in der dargestellten Ausführungsform wenigstens teilweise in eine Lichtaustrittsfläche 8' an einem Teil des Oberteils 41 des Basiselements 4 geleitet. Des Weiteren wird das Licht in Lichtaustrittsflächen 8 an der Zusatzmatte 2 geleitet. In der dargestellten Ausführungsform weist die Zusatzmatte 2 am die Zusatzmatte umgebenden Saumbereich die Zusatzmatte wenigstens teilweise umfassende Lichtaustrittsfläche 8 auf. Das von dem Basiselement 4 austretende Licht wird hierbei über lichtleitende Elemente im Saumbereich der Zusatzmatte 2 geführt. Als lichtleitende Elemente eignen sich hierbei beispielsweise durchsichtige, lichtleitende Kunststoffe, Glasfasern, oder andere geeignete Materialien. Vorzugsweise wird das Licht über die Lichtaustrittsfläche 8 der Zusatzmatte 2 möglichst homogen abgestrahlt.

In den Figuren 8a und 8b sind dreidimensionale Ansichten des Basiselements und des Aufsetzelements gemäß der in Figur 7 dargestellten Ausführungsform der Befestigungseinrichtung 1 dargestellt.

Hierbei zeigt Figur 8a das Oberteil 41 des Basiselements 4 und Figur 8b das Aufsetzelement 5 der Befestigungseinrichtung 1. Das Oberteil 41 umfasst ein Bodenteil 418 und ein mit diesem beispielsweise über ein Scharnier verbundenes Deckelteil 419. Das Deckelteil 419 ist über das Scharnier öffen und schließbar, wobei das Scharnier vorzugsweise über einen Rastmechanismus verfügt, um ein ungewolltes Öffnen zu verhindern. In den von dem Bodenteil 418 und dem Deckelteil 419 gebildeten Raum wird das Aufsetzelement 5 mit der Zusatzmatte 2 eingelegt und das Deckelteil 419 wird geschlossen, wobei der Rastmechanismus des Scharniers das Deckelteil 419 geschlossen hält. Das Bodenteil 418 des Oberteils 41 weist Lichtaustrittsflächen 8, 8' auf, über die das Licht aus dem Basiselement 4 austreten kann und in die lichtleitenden Elemente des Aufsetzelements 5 bzw. über dieses an die Lichtaustrittsflächen 8 der Zusatzmatte 2 geführt wird.

Das Aufsetzelement 5 ist in der dargestellten Ausführungsform als im Querschnitt U-förmiges Aufsteckelement ausgebildet, wobei das Aufsetzelement 5 vorzugsweise einstückig ausgebildet ist und ein miteinander fest verbundenes Unterteil 51 und ein Oberteil 52 aufweist. Damit das Licht aus den Lichtaustrittsflächen 8, 8' des Basiselements 4 zu den Lichtaustrittsflächen 8 der Zusatzmatte 2 gelangen kann, weist das Aufsetzelement 5 im Bereich des Unterteils 51 Öffnungen 512 im Bereich der Lichtaustrittsflächen 8, 8' des Oberteils 41 des Basiselements 4 auf. In der dargestellten Ausführungsform weist das Oberteil 52 des Aufsetzelements 5 lichtleitende Elemente 9, 9' auf, über die Licht weiter in eine Lichtaustrittsfläche 8' im Deckelteil 419 des Oberteils 41 gelangen kann.

Die Erfindung ist nicht auf die in den Figuren 1 bis 8a dargestellten Ausführungsformen der Befestigungseinrichtung beschränkt, vielmehr können das Basiselement, das Aufsetzelement und/oder die Zusatzmatte an nahezu beliebigen Stellen Lichtaustrittsflächen aufweisen, über die das Licht austreten kann.

**Bezugszeichenliste**

| | | | |
|---|---|---|---|
| 1 | Befestigungseinrichtung | 513 | Aufnahmeteil |
| | | 514 | Ringteil |
| 2 | Zusatzmatte | 52 | Unterteil |
| 21 | Öffnung | 521 | Grundplatte |
| 3 | Teppichboden | 522 | Halteteil |
| 31 | Öffnung | 523 | Zungenteil |
| 4 | Basiselement | 524 | Hakenteil |
| 41 | Oberteil | 525 | Anschlagelement |
| 411 | Kopfteil | 526 | Öffnung |
| 412 | Innenraum | 527 | Ringteil |
| 413 | Schulter | 6, 6' | Einrastvorrichtung |
| 414 | Tellerteil | 61 | Vorsprung |
| 415 | Aufnahmeteil | 62 | Vertiefung |
| 416 | Ringteil | 7 | Beleuchtungseinheit |
| 417 | Aufnahmeteil | 71 | Leuchtmittel |
| 418 | Bodenteil | 73 | Leuchtquelle |
| 419 | Deckelteil | 73 | elektronische |
| 42 | Unterteil | | Schaltung |
| 421 | Grundplatte | 74 | Kontaktanschlüsse |
| 422 | Zapfen | 75 | Schaltmechanismus |
| 423 | Öffnung | 76 | Montageplatte |
| 424 | Halteteil | 77 | Gehäuse |
| 425 | Ringteil | 8, 8' | Lichtaustrittsfläche |
| 5 | Aufsetzelement | 81 | Steg |
| 51 | Oberteil | 9, 9' | lichtleitendes |
| 511 | Deckelteil | | Element |
| 512 | Öffnung | | |

## Patentansprüche

1. Befestigungseinrichtung für eine Zusatzmatte (2) mit einem an einem Teppichboden (3) oder dergleichen eines Kraftfahrzeuges befestigbaren Basiselement (4), an dem eine auf dem Teppichboden (3) angeordnete Zusatzmatte (2) oder dergleichen befestigbar ist, und mit einem Aufsetzelement (5), welches in einer Öffnung (21) der Zusatzmatte (2) befestigt ist, wobei zur Befestigung des Aufsetzelementes (5) am Basiselement (4) eine Einrastvorrichtung (6) vorgesehen ist, wobei
die Befestigungseinrichtung (1) ein Leuchtmittel (7) umfasst, **dadurch gekennzeichnet, dass** das Leuchtmittel (7) eine Lichtquelle (71) aufweist, die im Basiselement (4) angeordnet ist.

2. Befestigungseinrichtung nach Anspruch 1,
bei der das Basiselement (4) ein Unterteil (42) und ein Kopfteil (41) aufweist, das geeignet ist, über den Teppischboden (3) hinauszuragen, und an dem das Aufsetzelement (5) befestigbar ist.

3. Befestigungseinrichtung nach Anspruch 2,
bei der das Basiselement (4), das Kopfteil (41) und das Aufsetzelement (5) wenigstens eine Lichtaustrittsfläche (8) aufweisen.

4. Befestigungseinrichtung nach Anspruch 3,
bei der das Basiselement (4) elektrische Kontaktanschlüsse (42, 43) aufweist, die mit dem Leuchtmittel (7) elektrisch leitend verbunden sind.

5. Befestigungseinrichtung Anspruch 4,
bei der zwischen den Kontaktanschlüssen (42, 43) und dem Leuchtmittel (7) eine elektronische Schaltung (9) zur Ansteuerung des Leuchtmittels (7) angeordnet ist.

6. Befestigungseinrichtung nach Anspruch 4,
bei der das Basiselement (4) und/oder das Kopfteil (41) mit wenigstens einem lichtleitendem Element (72) versehen sind, das das von dem Leuchtmittel (7) ausgestrahlte Licht an die wenigstens eine Lichtaustrittsfläche (8) führt.

7. Befestigungseinrichtung nach einem der Ansprüche 1 bis 6,
bei der an dem Basiselement (4) ein Schaltmechanismus (44) zur Ansteuerung des Leuchtmittels (7) angeordnet ist, der durch das Aufsetzelement (5) betätigbar ist.

8. Befestigungseinrichtung nach Anspruch 7,
bei der der Schaltmechanismus (44) betätigbar ist, wenn das Aufsetzelement (5) mit dem Basiselement (4) verrastet ist.

9. Befestigungseinrichtung nach einem der Ansprüche Ibis 8,
bei der die Leuchtquelle (71) eine Kaltlichtquelle ist.

10. Befestigungseinrichtung nach einem der Ansprüche 3 bis 9,
bei der die Lichtaustrittsfläche (8) in Form eines wenigstens teilweise transparenten Logos ausgebildet ist.

11. Befestigungseinrichtung nach Anspruch 2,
bei der das Kopfteil (41) des Basiselements (4) auf der Oberseite wenigstens eine Lichtaustrittsfläche (8) aufweist.

12. Befestigungseinrichtung nach Anspruch 2,
bei der das Aufsetzelement (5) wenigstens eine Lichtaustrittsfläche (8) aufweist, wobei das Licht aus einer Lichtquelle (71) im Basiselement (4) über lichtleitende Elemente (72) am Kopfteil (41) zu dem Aufsetzelement (5) geleitet wird.

13. Befestigungseinrichtung nach Anspruch 2,
bei der die Lichtaustrittsfläche (8) an der Seitenkante und/oder der Oberseite des Aufsetzelements (5) angeordnet sind.

14. Befestigungseinrichtung nach Anspruch 2 mit
einer Zusatzmatte (2), wobei die Zusatzmatte (2) eine Lichtaustrittsfläche (8) aufweist.

15. Befestigungseinrichtung nach nach Anspruch 14,
bei dem die Zusatzmatte (2) wenigstens an einer ihrer Seitenkanten und/oder im von den Seitenkanten umgebenen Innenbereich der Zusatzmatte (2) ein oder mehrere lichtleitende Elemente (9, 9') aufweist.

16. Befestigungseinrichtung nach Anspruch 15,
bei dem das von dem Leuchtmittel (7) der Befestigungseinrichtung (1) ausgesandte Licht über die lichtleitenden Elemente (9, 9') als Lichtaustrittsfläche (8, 8') austritt.

## Claims

1. A fastening device for an additional mat (2) having a base element (4) which can be fastened to a carpet (3) or the like of a motor vehicle and to which an additional mat (2) or the like arranged on the carpet (3) can be fastened, and having an attachment element (5) which is fastened in an opening (21) of the additional mat (2), wherein a latching device (6) is provided for fastening the attachment element (5) to the base element (4), wherein the fastening device includes a lighting means (7), **characterized in that** the lighting means (7) has a light source (71) which is arranged in the base element (4).

2. The fastening element according to claim 1, wherein the base element (4) has a bottom part (42) and a head part (41) which is adapted to protrude beyond the carpet (3) and to which the attachment element (5) can be fastened.

3. The fastening element according to claim 2, wherein the base element (4), the head part (41) and the attachment element (5) have at least one light-emitting surface (8).

4. The fastening device according to claim 3, wherein the base element (4) has electrical contact connections (42, 43) which are connected to the lighting means (7) in an electrically conducting manner.

5. The fastening device according to claim 4, wherein an electronic circuit (9) for controlling the lighting means (7) is arranged between the contact connections (42, 43) and the lighting means (7).

6. The fastening device according to claim 4, wherein the base element (4) and/or the head part (41) are provided with at least one light-conducting element (72) which directs the light emitted from the lighting means (7) to the at least one light-emitting surface (8).

7. The fastening device according to any of claims 1 to 6, wherein a switching mechanism (44) which can be actuated by means of the attachment element (5) is arranged on the base element (4) for controlling the lighting means (7).

8. The fastening device according to claim 7, wherein the switching mechanism (44) can be actuated when the attachment element (5) is engaged with the base element (4).

9. The fastening device according to any of claims 1 to 8, wherein the light source (71) is a cold-light source.

10. The fastening device according to any of claims 3 to 9, wherein the light-emitting surface (8) is configured in the form of an at least partially transparent logo.

11. The fastening device according to claim 2, wherein the head part (41) of the base element (4) has at least one light-emitting surface (8) on the upper side.

12. The fastening device according to claim 2, wherein the attachment element (5) has at least one light-emitting surface (8), wherein the light is directed from a light source (71) in the base element (4) via light-conducting elements (72) on the head part (41) to the attachment element (5).

13. The fastening device according to claim 2, wherein the light-emitting surface (8) is arranged on the lateral edge and/or the upper side of the attachment element (5).

14. A fastening device according to claim 2 having an additional mat (2), wherein the additional mat (2) has a light-emitting surface (8).

15. The fastening device according to claim 14, wherein the additional mat (2) has one or more light-conducting elements (9, 9') at least on one of its lateral edges and/or in the inner area of the additional mat (2) surrounded by the lateral edges.

16. The fastening device according to claim 15, wherein the light emitted from the lighting means (7) of the fastening device (1) emits via the light-conducting elements (9, 9') as a light-emitting surface (8, 8').

## Revendications

1. Dispositif de fixation pour un surtapis (2), comportant un élément de base (4) qui peut être fixé sur un tapis de plancher (3) ou similaire d'un véhicule automobile, sur lequel on peut fixer un surtapis (2) ou similaire agencé sur le tapis de plancher (3), et comportant un élément de mise en place (5) qui est fixé dans une ouverture (21) du surtapis (2), un dispositif d'enclenchement étant prévu pour la fixation de l'élément de mise en place (5) sur l'élément de base (5), le dispositif de fixation (1) comprenant un agent lumineux (7), **caractérisé en ce que** l'agent lumineux (7) présente une source lumineuse (71) qui est agencée sur l'élément de base (4).

2. Dispositif de fixation selon la revendication 1, dans lequel l'élément de base (4) présente une partie inférieure (42) et une partie de tête (41) qui est appropriée pour faire saillies au-dessus du tapis de plancher (3) et sur lequel l'élément de mise en place (5) peut être fixé.

3. Dispositif de fixation selon la revendication 2, dans lequel l'élément de base (4), la partie de tête (41) et l'élément de mise en place (5) présentent au moins une surface de sortie de lumière (8).

4. Dispositif de fixation selon la revendication 3, dans lequel l'élément de base (4) présente des bornes de contact électrique (42, 43) qui sont connectées électriquement à l'agent lumineux (7).

5. Dispositif de fixation selon la revendication 4, dans lequel un circuit électronique (9) est agencé entre les bornes de contact (42, 43) et l'agent lumineux (7) pour piloter l'agent lumineux (7).

6. Dispositif de fixation selon la revendication 4, dans lequel l'élément de base (4) et/ou la partie de tête (41) sont pourvus d'au moins un élément (72) conducteur de lumière qui guide la lumière émise par l'agent lumineux (7) vers ladite au moins une surface de sortie de lumière (8).

7. Dispositif de fixation selon l'une des revendications 1à 6, dans lequel un mécanisme de commutation (44) est agencé sur l'élément de base (4) pour piloter l'agent lumineux (7), lequel peut être actionné par l'élément de mise en place (5).

8. Dispositif de fixation selon la revendication 7, dans lequel le mécanisme de commutation (44) peut être actionné lorsque l'élément de mise en place (5) est enclenché avec l'élément de base (4).

9. Dispositif de fixation selon l'une des revendications 1 à 8, dans lequel la source de lumière (71) est une source de lumière froide.

10. Dispositif de fixation selon l'une des revendications 3 à 9, dans lequel la surface de sortie de lumière (8) est réalisée sous la forme d'un logo au moins en partie transparent.

11. Dispositif de fixation selon la revendication 2, dans lequel la partie de tête (41) de l'élément de base (4) présente sur la face supérieure au moins une surface de sortie de lumière (8).

12. Dispositif de fixation selon la revendication 2, dans lequel l'élément de mise en place (5) présente au moins une surface de sortie de lumière (8), la lumière étant guidée vers l'élément de mise en place (5) depuis une source de lumière (71) dans l'élément de base (4) via des éléments (72) conduisant la lumière situés sur la partie de tête (41).

13. Dispositif de fixation selon la revendication 2, dans lequel les surfaces de sortie de lumière (8) sont agencées sur le bord latéral et/ou sur la face supérieure de l'élément de mise en place (5).

14. Dispositif de fixation selon la revendication 2, comportant un surtapis (2), le surtapis (2) présentant une surface de sortie de lumière (8).

15. Dispositif de fixation selon la revendication 14, dans lequel le surtapis (2) présente un ou plusieurs éléments (9, 9') conducteurs de lumière au moins sur un de ses bords latéraux et/ou dans la zone entourée par les bords latéraux du surtapis (2).

16. Dispositif de fixation selon la revendication 15, dans lequel la lumière émise par l'agent lumineux (7) du dispositif de fixation (1) sort via les éléments (9, 9') conducteurs de lumière sous forme de surface de sortie de lumière (8, 8').
